# EUROPEAN PATENT APPLICATION

(11) **EP 1 413 507 A1**
(43) Date of publication of application: **28.04.2004**
(21) Application number: 02023454.8
(22) Date of filing: 21.10.2002
(51) Int. Cl.: B62M 1/04, B62K 3/00, B62K 5/08

(54) **scooter**

(71) Applicant: Lorenzon, Diego, 30020 S. Giorgio Al Tagliamento (IT); Biancon, Roberto, 30021 Caorle (IT); Doretto, Maurizio, 30021 Caorle (IT)
(72) Inventor: Lorenzon, Diego, 30020 S. Giorgio Al Tagliamento (IT); Biancon, Roberto, 30021 Caorle (IT); Doretto, Maurizio, 30021 Caorle (IT)
(74) Representative: Piovesana, Paolo

(57) **Abstract**

A scooter characterised by comprising:
- a horizontal footplate (2) supporting at least one front steered wheel (10, 54) and at least one rear drive wheel (14, 14', 10'),
- a control mechanism (8, 52) for the steered wheels,
- hinged to the footplate (2), at least one pedal (18) acting on a device (22, 26) for transforming motion from periodic to circular for the freewheel operation of a main sprocket (30),
- elastic return means (23) associated with each pedal (18),
- flexible transmission means (32) between the main sprocket (30) and a secondary sprocket (40, 48) coupled to the rear drive wheel (14, 14', 10).

## Description

This invention relates to a scooter.

Scooters are known formed from a narrow footplate provided with two longitudinally aligned wheels and a handlebar for steering the front wheel. Travel is achieved by resting one of the two feet of the driver on the footplate and successively thrusting the other foot against the ground.

An object of the invention is to provide a scooter which can be made to travel by a movement enabling the driver's muscles to be strengthened.

This and further objects which will be apparent from the ensuing description are attained according to the invention by a scooter as described in claim 1.

A preferred embodiment of the invention and some variants thereof are described in detail hereinafter with reference to the accompanying drawings, in which:

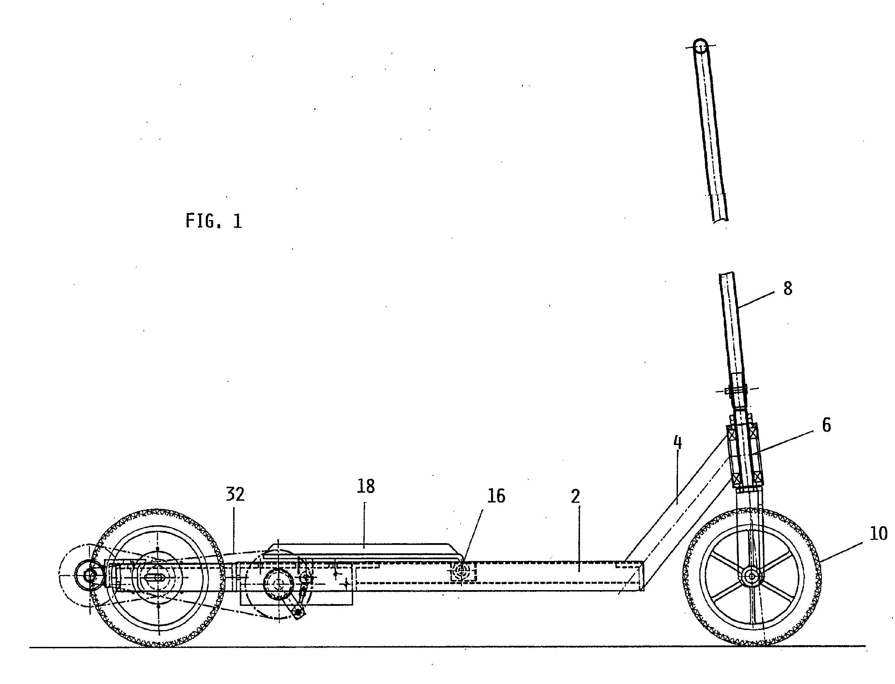

- Figure 1: is a side view of a scooter according to the invention,

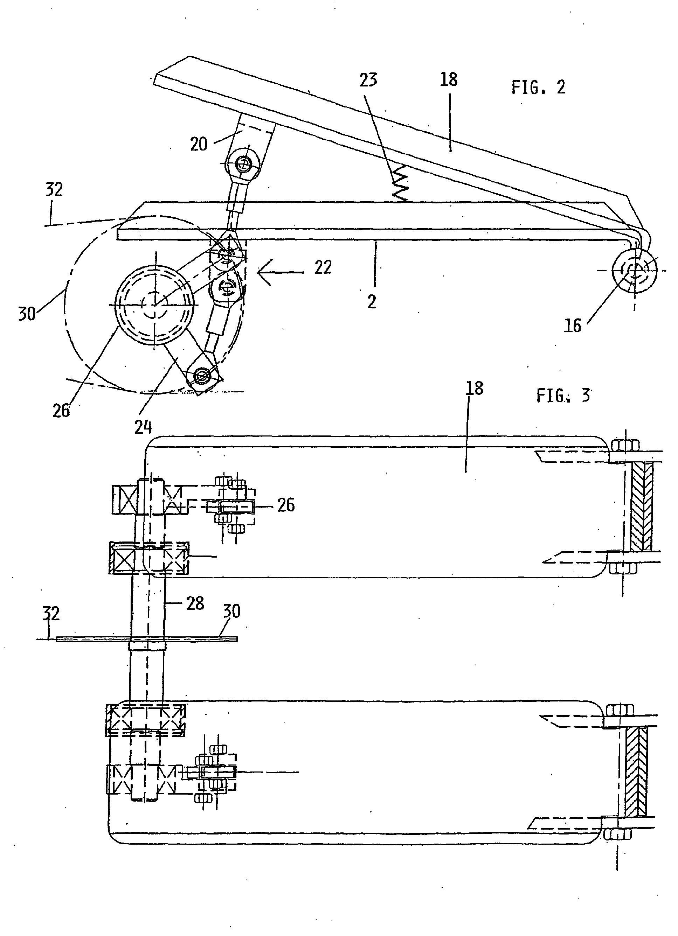

- Figure 2: is an enlarged detailed view of the drive device,
- Figure 3: is a plan view thereof,
- Figure 4: is a plan view of the scooter,
- Figure 5: is a plan view of a first variant thereof,
- Figure 6: shows a second variant thereof, and
- Figure 7: shows a further variant thereof.

As can be seen from the figures the scooter of the invention comprises substantially a footplate 2 of light alloy or composite or polymer material to which a bracket 4 is bonded for supporting a bush 6 in which a handlebar 8 engages for steering a front wheel 10.

The footplate 2 is provided at its rear with a support fork 12 for two rear wheels 14, 14' respectively, constructed preferably of die-cast light alloy or of polymer material and provided with tyres of air tube or gel type.

Two pedals 18 are hinged to the footplate 2 about two coaxial pins 16, and are provided on their lower surface with a lug 20 to which a connecting rod-crank device indicated by 22 is hinged.

In the absence of external forces a coil spring 23 maintains each pedal 18 in the configuration in which it lies at the greatest angle to the footplate 2 allowed by the connecting rod-crank device.

Each end of the two cranks 24 is rigid with a freewheel device 26 keyed onto a shaft 28 on which a ring gear 30 is also keyed.

In a modified embodiment not shown in the drawings, a rack is rigid with each footplate and engages a corresponding sprocket rigid with the freewheel device.

Said ring gear 30 rotates a chain 32 engaging a sprocket 34 of a change-speed gear device 36, on the shaft 38 of which a further ring gear 40 is keyed.

The ring gear 40 is connected by a chain 42 to a sprocket 44 which is connected to the wheel 14 by means of a freewheel device 46.

On the wheel 14 and on the wheel 14' there are mounted drum brakes operated by a cable, the other end of which is operated by a lever present in the handlebar.

In the same manner the change-speed gear device is operated by a further cable having its other end also mounted on the handlebar.

All these devices are of traditional type and are not shown on the drawings for simplicity of representation.

In operating the scooter of the invention, the driver firstly places one foot on one of the two pedals 18 and acts with the other foot to provide a starting thrust. He then rests the other foot on the other pedal and exerts a pressure alternately on these two pedals in order to cause the ring gear 30 to rotate by way of the connecting rod-crank device 22, with consequent continuous rotation of the wheel 14 by way of the linkage formed by the chain 32, the sprocket 34, the ring gear 40, the chain 42 and the sprocket 44.

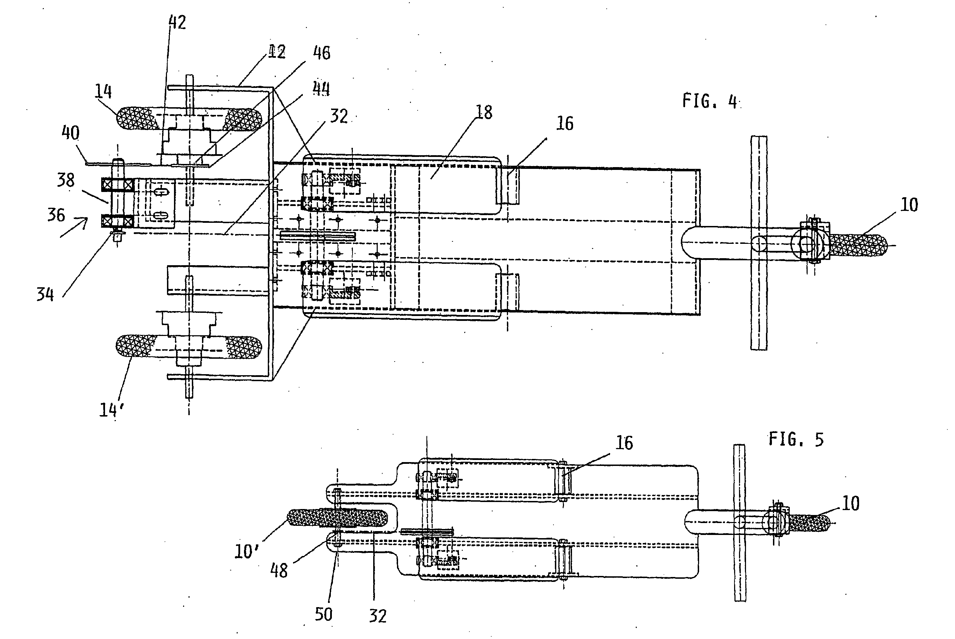

In the embodiment shown in Figure 5 the scooter of the invention is provided with a single rear wheel 10'.

In this embodiment the chain 32 is rigid with a sprocket 48 keyed onto the support hub 50 of the rear wheel 10', which is longitudinally aligned with the front wheel 10.

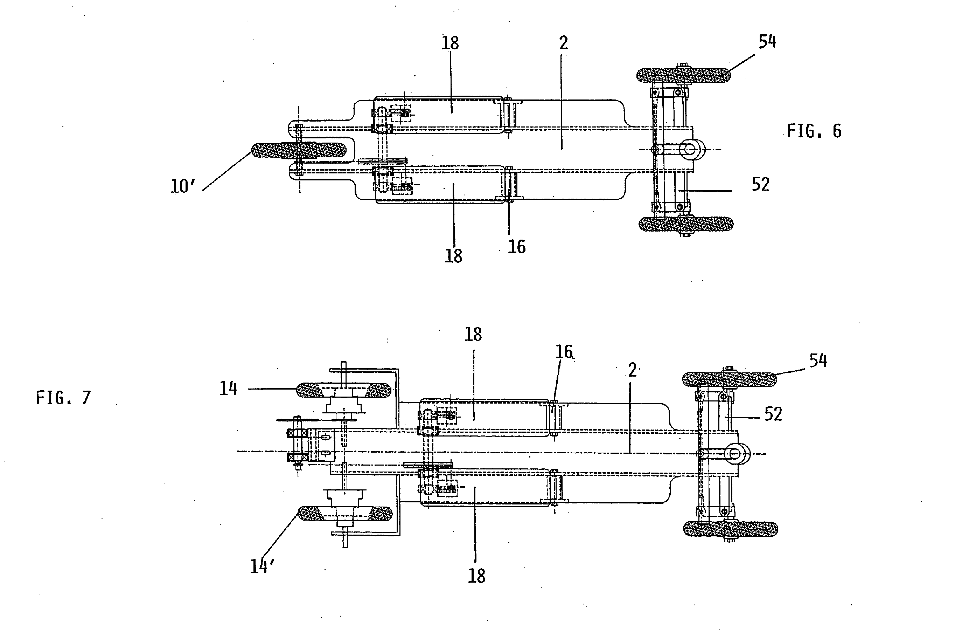

In the embodiment shown in Figure 6 the scooter rear wheel is similar to that of the embodiment shown in Figure 5, whereas an articulated parallelogram device 52 controlling two front wheels 54 is rigid with the column 8 of the handlebar.

In the embodiment shown in Figure 7 the scooter consists of a pair of rear wheels such as those shown in the embodiment of Figure 4, and a pair of front wheels such as those shown in the embodiment of Figure 6.

From the aforegoing it is apparent that the scooter of the invention presents numerous advantages and in particular exerts a strengthening action on the leg muscles.

## Claims

1. A scooter **characterised by** comprising:
- a horizontal footplate (2) supporting at least one front steered wheel (10, 54) and at least one rear drive wheel (14, 14', 10'),
- a control mechanism (8, 52) for the steered wheels,
- hinged to the footplate (2), at least one pedal (18) acting on a device (22, 26) for transforming motion from periodic to circular for the freewheel operation of a main sprocket (30),
- elastic return means (23) associated with each pedal (18),
- flexible transmission means (32) between the main sprocket (30) and a secondary sprocket (40, 48) coupled to the rear drive wheel (14, 14', 10).

2. A scooter as claimed in claim 1, **characterised in that** the device for transforming motion from periodic to circular consists of a connecting rod-crank device (22) rigid with a freewheel device keyed onto the same shaft as the main sprocket.

3. A scooter as claimed in claim 2, **characterised in that** the device for transforming motion from periodic to circular consists of a rack rigid with the pedal and engaging a sprocket rigid with the freewheel device.

4. A scooter as claimed in claim 1, **characterised in that** the flexible transmission members consist of a first chain (32) engaging the main sprocket (30) and a sprocket (34) of a change-speed gear device, on the shaft of which there is keyed an intermediate sprocket (20) which is connected to the secondary sprocket (40, 48) by way of a second chain (42).

5. A scooter as claimed in claim 4, **characterised in that** the second chain (42) is connected to the secondary sprocket (40, 48) via a freewheel device.

6. A scooter as claimed in claim 1, **characterised in that** the footplate is provided at its rear with a support fork for at least one drive wheel.

7. A scooter as claimed in claim 1, **characterised in that** the footplate (2) comprises at its front two steered wheels (54) mounted on a frame (52) in the form of an articulated parallelogram controlled by a column rigid with the handlebar (8).
